# EUROPEAN PATENT APPLICATION

(11) **EP 3 366 649 A1**
(43) Date of publication of application: **29.08.2018**
(21) Application number: 17157379.3
(22) Date of filing: 22.02.2017
(51) Int. Cl.: C02F 1/00, B01D 37/02, B01D 61/14, C02F 1/44, C02F 3/12, C02F 11/04, C02F 101/30

(54) **WASTEWATER TREATMENT LINES FOR IMPROVED CARBON UPTAKE THROUGH CAKE FILTRATION OF WASTEWATER**

(71) Applicant: Suez International, 92040 Paris la Défense Cedex (FR)
(72) Inventor: Delahaye, Mathieu, 78350 Jouy en Josas (FR); Holst, Troy, 78580 Maule (FR)
(74) Representative: Plougmann Vingtoft a/s

(57) **Abstract**

The field of the invention is wastewater treatment, including both municipal and industrial wastewaters. Wastewater treatment plants have long been seen only as environment protection plants. The invention tends to turn WWTP (wastewater treatment plants) into water resource and recovery facilities, turning wastewater treatment plants into energy and resource producing plants. WWTP may no longer be facilities designed and operated to remove water pollution like carbon, nitrogen or phosphorus, but may be turned into plants valorizing the constituents inside raw wastewater. The invention is directed to filtering wastewater using cake filtration, the cake filter having been created by depositing a mixture of primary and/or biological sludge and digested sludge from the digestion of primary sludge and/or biological sludge on a fluid penetrable support surface.

## Description

### FIELD OF THE INVENTION

The field of the invention is wastewater treatment, including both municipal and industrial wastewaters. Wastewater treatment plants have long been seen only as environment protection plants. The invention tends to turn WWTP (wastewater treatment plants) into water resource and recovery facilities, turning wastewater treatment plants into energy and resource producing plants. WWTP may no longer be facilities designed and operated to remove water pollution like carbon, nitrogen or phosphorus, but may be turned into plants valorizing the constituents inside raw wastewater.

### BACKGROUND OF THE INVENTION

Wastewater pollution is mainly made up of carbon and nitrogen. The actual and conventional way to deal with those pollutants is to remove them through physical and biological treatment.

Physical treatment, such as primary clarification will remove most of the suspended solids but not the soluble pollution. The soluble pollution will then have to be removed by biological treatment. The biological treatment commonly used consumes a lot of energy through the use of aeration (oxygen) in order to biologically oxidize the pollutants.

Thus the energy used for the aeration of biological tanks accounts for almost 1% of the energy consumption of developed countries.

However, WWTP can also produce energy through the digestion of the sludge produced on site from the primary or secondary treatments. The more degradable carbon is in the sludge, the more energy can be produced.

In order to improve the energy balance on a WWTP, carbon pollution would have to be captured in the primary treatment and not oxidize in order to:
- Reduce the energy consumption in the biological tank
- Increase the energy production in the anaerobic digestion step

Conventional technologies used for primary treatment typically only capture a fraction of the carbon present in the raw wastewater. Two types of technologies are used:
- Settling with clarifiers. The settling can be improved with the use of chemicals (coagulants, flocculants)
- Filtration with for example rotating belt filters. The performance of those belt filters can also be improved by the use of chemicals.

Settling and filtration are mainly removing particles (suspended solids) from wastewater, and when using chemicals colloidal matter can also be removed but no soluble pollution is removed by these processes. The soluble carbon pollution is therefore typically removed biologically, oxidized, in the biological treatment step of the WWTP.

In some cases, treatment lines (facilities) have been developed to reduce this oxidation and capture part of the soluble carbon for further degradation into biogas in anaerobic digestion, for example, using the bio-sorption process. In this type of "A/B process treatment line, the first step called "A" uses an extremely high load biological reactor coupled with clarifiers (for separation and recirculation of the biomass into the bioreactor), the biomass and sludge in the bioreactor adsorbs part of the incoming soluble COD(soluble substance(s) having a Chemical Oxygen Demand) and the retention time and oxygen supplied are low enough to avoid the oxidation of this soluble COD. In the second step "B" step a second biological process is used to eliminate the remaining carbon pollution as well as the nitrogen pollution.

The limits of the prior art technologies are mainly linked to their performance. Primary treatments such as primary clarification and primary filtration (rotating belt filters) remove suspended solids, and by consequence particulate BOD (Biological Oxygen Demand) and COD. Those technologies can remove colloidal COD and BOD by using chemicals. However, those technologies have no effect on soluble COD and BOD.

Hence, an improved process and device for carbon uptake would be advantageous, and in particular a more efficient and/or reliable process and method would be advantageous.

### OBJECT OF THE INVENTION

An object of the present invention is to provide an alternative to the prior art.

In particular, it may be seen as a further object of the present invention to provide a process and device that solves the above mentioned problems of the prior art.

### SUMMARY OF THE INVENTION

Thus, the above described object and several other objects are intended to be obtained in a first aspect of the invention by providing a process for treatment of wastewater the process comprising the steps of
- providing primary sludge (PS) from a primary treatment of at least a fraction of said wastewater and/or biological sludge (BS) from a biological treatment of at least a fraction of the wastewater;
- providing digested sludge (DS) by digestion of primary sludge (PS) and/or biological sludge (BS);
- providing a filtration cake by deposition of solids on a fluid penetrable support surface, wherein said solids being comprised in the digested sludge (DS) and in at least one of primary sludge (PS) and/or in a biological sludge (BS);
- treating said wastewater, wherein treating said water comprises filtering wastewater through the filtration cake thereby providing a filtrate (F), the wastewater preferably being raw wastewater, screened wastewater, primary treated wastewater and/or a biologically treated wastewater.

In the scope of the present invention "filter wastewater" means to pass said wastewater through a device which is designed to remove certain particles contained in it. In the scope of the present invention the device designed to remove certain particles is the filtration cake provided by deposition of solids on a fluid penetrable support surface.

Preferably, a process for treatment of wastewater according to preferred embodiments of the invention may further comprise biologically treating wastewater or said filtrate to provide biologically treated wastewater. Preferably, such a process may further comprise separating the biologically treated wastewater into at least treated water and biological sludge. In preferred embodiments, the process for treatment of wastewater may further comprise digesting said biological sludge BS to provide digested sludge (DS).

In preferred embodiments of the invention, the process for treatment of wastewater may further comprise primary treating raw wastewater by separating raw wastewater into at least primary sludge and primary treated wastewater (PWT). In such embodiments, the solid content is typically higher in the primary sludge than in the primary treated wastewater, and at least a fraction said primary sludge may be digested to provide digested sludge.

Preferably, a process for treatment of wastewater according to preferred embodiments of the present invention may further comprise a deposition of solids contained in the primary sludge on said fluid penetrable support surface to provide the filtration cake,.

Preferably, a process for treatment of wastewater according to preferred embodiments of the invention may further comprise filtering said primary treated wastewater through the filtration cake.

Preferably, a process for treatment of wastewater according to preferred embodiments of the invention may further comprise filtering said raw wastewater through the filtration cake, preferably so as to filter a blend of raw wastewater and primary treated wastewater.

In preferred embodiments of the invention, the primary treating may comprise treating the raw wastewater by one or more of a clarifier, an enhanced clarifier, a rotating belt filtration, a hydro cyclone, a settler.

Preferably, a process for treatment of wastewater according to preferred embodiments of the invention may comprise filtering raw wastewater through the filtration cake to produce a filtrate thereof.

Preferably, a process for treatment of wastewater according to preferred embodiments of the invention may further comprise biologically treating said filtrate.

Preferably, a process for treatment of wastewater according to preferred embodiments of the invention may further comprise filtering said treated water through the filtration cake, to produce filtered treated water as a filtrate.

Preferably, a process for treatment of wastewater according to preferred embodiments the invention may further comprise a screening of raw wastewater to remove solids above a certain size, such as removing solids have a size larger than 1mm, such as larger than 3mm, preferably larger than 6mm, such as larger than 10mm, preferably larger than 15mm, such as larger than 20mm, from the raw wastewater, said screening is fluidic arranged upstream of said filtering through the filtration cake.

In preferred embodiments of the invention, the biologically treatment considered herein may be performed using a membrane bioreactor.

In preferred embodiments of the invention, the fluid penetrable support surface may be provided by an element comprising through going openings of a size being selected so as to arrest solids having a size above a certain size, preferably above 25 micron, such as above 15 micron, such as above 10 micron, preferably above 5 micron.

Preferably, a process for treatment of wastewater according to preferred embodiments of the invention may further comprise removal of the filtration cake and digesting at least a fraction of the filtration cake material.

In a second aspect, the invention relates to a wastewater treatment facility preferably comprising
- a digester fluidic connected to means for providing primary sludge and/or means for providing biological sludge; said digester being configured for digesting said primary sludge and/or biological sludge to provide digested sludge;
- a cake filtration device comprising a fluid penetrable support surface configured for supporting a filtration cake, said cake filtration device being selectively fluidic connected
   - to the digester to receive digested sludge;
   - to said means for providing at least one of primary sludge and/or biological sludge;
   - means for providing wastewater, such as raw wastewater, screened wastewater, primary treated water and/or biological treated wastewater to filter said wastewater through the filtration cake to produce a filtrate.

Preferably, a wastewater treatment facility according to preferred embodiments of the invention may further comprising a biological reactor for biological treatment of wastewater or said filtrate to provide biologically treated wastewater.

Preferably, a wastewater treatment facility according to embodiments of the invention may further comprise a separator fluidic connected to the biological reactor for receiving said biological treated wastewater and separating it into at least treated water and biological sludge.

In preferred embodiments of the invention, the digester may be fluidic connected to the separator for receiving and digesting said biological sludge to provide digested sludge.

Preferably, a wastewater treatment facility according to preferred embodiments of the invention may further comprise a primary treatment system having an inlet for receiving raw wastewater and may be configured for separating said raw wastewater into at least primary sludge and primary treated wastewater. Preferably, the solid content is higher in the primary sludge than in the primary treated wastewater, and primary treatment system may be fluidic connected to said digester to feed at least a fraction of said primary sludge into the digester.

Preferably, the cake filtration device may further be selectively fluidic connected to the primary treatment system to receive primary sludge, preferably from said primary treatment system, to deposit solids contained in the received primary sludge on said fluid penetrable support surface.

Preferably, the filtration cake system may be fluidic connected to the primary treatment system for receiving and filtering primary treated wastewater.

Preferably, the filtration cake system may further be fluidic connected to means for providing raw wastewater, preferably so as to filter a blend of raw wastewater and primary treated wastewater.

Preferably, the primary treatment system may comprise one or more of a clarifier, an enhanced clarifier, a rotating belt filtration, a hydro cyclone, a settler.

Preferably, the cake filtration device may be fluidic connected to means for providing raw wastewater to produce a filtrate thereof.

Preferably, a wastewater treatment facility according to preferred embodiments the invention may further comprising a biological reactor in fluidic connection with the cake filtration device to receive a filtrate provided by the cake filtration device.

Preferably, the cake filtration device may be fluidic connected to the separator to receive and filter said treated water to produce filtered treated water as a filtrate.

Preferably, a wastewater treatment facility according to preferred embodiments of the invention may further comprising a screening system for removing solids above a certain size from the raw wastewater, such as removing solids have a size larger than 1mm, such as larger than 3mm, preferably larger than 6mm, such as larger than 10mm, preferably larger than 15mm, such as larger than 20mm, said screening system is preferably fluidic connected upstream of cake filtration device.

Preferably, a biological reactor as referenced herein may be a membrane bioreactor (MBR).

Preferably, the fluid penetrable support surface as referenced herein may be provided by an element comprising through going openings of a size being selected so as to arrest solids having a size above a certain size, preferably above 25 micron, such as above 15 micron, such as above 10 micron, preferably above 5 micron.

Terms used herein are used in a manner being ordinary to a skilled person; some of these terms are elucidated below:
*Primary sludge* is preferably used to mean a product obtained or obtainable by subjecting wastewater to a clarification *or a filtration* process in which the heaviest settleable solid fractions contained in the wastewater settle to the bottom of the clarifier *or the larger solid fractions contains in the wastewater is filtered out from the raw wastewater.* The settled solids (which may comprise or be contained in a liquid) *or the retained solids are* preferably considered to be primary sludge.

*Digester sludge (or digested sludge)* is preferably used to mean a product obtained or obtainable by biological digestion of primary sludge and surplus biological sludge under anaerobic conditions.

*Activated sludge* (activated sludge mixed liquor) is preferably used to mean the floccular suspension of biomass maintained in the process tank(s) of a biological wastewater treatment plant, which performs the biological degradation of substances contained in wastewater.

*Biological sludge* is preferably used to mean sludge resulting from a process of biologically treating wastewater.

*Raw wastewater* is preferably used to mean wastewater that has not been subjected to a treatment method according to the present invention; raw wastewater includes but is not limited to e.g. sewage water that has not been subjected to a treatment; further a sifting/screening is preferably not considered a treatment within the scope of the invention;

*Treated water* is preferably used to mean wastewater that has been subjected to a treatment including a biological treatment, a chemical treatment or a physical treatment such as filtering.

*Screened wastewater* is preferably used to reference wastewater that has been exposed to a screening process, preferably being a mechanical screening process.

*Fluidic connected* is preferably used to mean that two or more elements / means are connected so that fluid may flow from one of the element to the other(s) (or vice versa), e.g. by a connection, a piping, a channel, a tube or the like.

*Selectively fluidic connected* preferably used to mean that the fluidic connection can be controllable shut-off and turned-on.

*Solids comprised* in sludge is preferably used to mean elements having a structural coherence, such as flocs or other elements.

*Means for providing primary sludge* is preferably used to reference a primary treatment system, in which a mechanical and/or chemical extraction of sludge from raw wastewater is carried out to produce primary sludge. The means for providing primary sludge may comprise a clarifier, enhanced clarifier, rotating belt filter, a settler, a primary settler of a rotating belt filter, or a drum/disc filter, with chemicals or not or the like.

*Means for providing biological sludge* is preferably used to reference a biological treatment device, such as a biological reactor in which wastewater or a fraction thereof is treated biologically. Such means for providing biological sludge may be selected from Membrane Bioreactors, Continuous Stirred Tank Bioreactors, Bubble Column Bioreactors, Airlift Bioreactors, Fluidized Bed Bioreactors, Packed Bed Bioreactors, Photo-Bioreactors. A separation may be applied to the biologically treated wastewater to separate water therefrom to provide biological sludge.

*Means for providing at least one of primary sludge and*/*or biological sludge* is typically used to reference "means for providing primary sludge" and/or "means for providing biological sludge".

*Means for providing wastewater* is preferably used to reference e.g. a distribution network for wastewater. This could be a tank receiving and storing wastewater from a production facility, from a road tank, or a sewerage (wastewater) network. The wastewater may be *raw wastewater* in which case, the wastewater is preferably used as it is readily available and/or be *screened wastewater* in which case a screening may have been applied to the wastewater to remove larger objects. The wastewater provided may be *primary treated water* preferably referencing wastewater that has been subjected to a primary treatment and/or *biological treated wastewater* preferably referencing wastewater that has been subjected to a biological treatment.

*Filtration cake* and *filtration cake layer* are used interchangeable herein.

In one aspect, the present invention resides inter alia in the use of a wastewater cake filtration step preceding (upstream of) the biological treatment or replacing the biological step depending on the treatment requirements of the WWTP.

In one aspect, the invention resides inter alia in the wastewater treatment lines that are set up to make the wastewater cake filtration step perform efficiently.

The wastewater filtration step may employ a filter cake created from any blend of biological sludge, primary sludge, digester sludge and coagulating additives. The wastewater treatment line is adapted to the design and operation of the cake filtration step.

Biosorption and A stage for A/B (as disclosed above) process are targeting a fraction of the soluble BOD and COD but an additional step is needed to remove particulate BOD or COD. This biosorption process remains quite large in terms of volumes and surface required, and requires a significant amount of equipment: biological reactors with aeration system and blowers, clarifiers with sludge evacuation equipment (scraper bridges, pumps, etc).

An advantage of the cake filtration technology is the performance on soluble and particular COD and BOD. In one step, particulate and soluble COD and BOD are removed with quite high yields. In preferred embodiments, the cake filtration technology uses blends of biological sludge, primary sludge and anaerobic sludge (sludge produced in an anaerobic digester - also referred to herein as digester sludge) that enables to reach a high level of removal of soluble COD and BOD. The innovative treatment lines that enable the work of the cake filtration technology are also the scope of the innovation.

The BOD is removed by the cake filtration process but not oxidized. It is adsorbed onto the filtration cake layer (sludge cake layer). Thus, the sludge extracted from the cake filtration technology is loaded in carbon and has more energy that can be recovered for example via producing biogas with anaerobic digestion.

The present invention may provide an efficient combination of a cake filtration device with other plant elements (unit operations), which produce desired wastewater treatment lines.
- A wastewater treatment plant employing a step of wastewater filtration preceding the biological treatment (or replacing biological treatment if required effluent can be met with just cake filtration), where the filtration aims at reducing the wastewater's particulate and soluble carbon (COD and BOD).
- A wastewater treatment plant employing a step of wastewater filtration where the waste solids, originating from the filter cake, are subjected to further treatment aiming at extraction of their energy content, such as anaerobic digestion
- A wastewater treatment plant where the wastewater filtration step employs a filter cake created from any blend of biological sludge (from a biological process), primary sludge, digester sludge and coagulating additives
- A wastewater treatment plant where part of all of the incoming wastewater stream is subjected to a primary clarification step producing primary sludge to be used in the filtration step for cake establishment if needed in the composition of the filter cake
- A wastewater treatment plant employing a step of wastewater filtration whose filtrate is subjected to further unit operations designed to remove or transform the remaining loading of wastewater

It has been shown through several tests that cake filtration of raw wastewater has different performances depending on the nature of the cake. Several cake layers were formed by mixture of primary, digested and biological sludge from wastewater treatment plants. The filtration performances were assessed in terms of TSS (Total Suspended Solids) and COD (total and soluble) removed.

It was found, for example, that a cake filtration using a 50/50 mixture of primary and biological sludge can remove 95 of TSS, and approximately 30 % and 45% of soluble and total COD, respectively. A cake filtration using a 50/50 mixture of primary and digested sludge can remove 50% of soluble COD, 65% of total COD and 85% of TSS. It has been found in connection with the present invention that different proportion of sludge blending can be set to achieve different levels of performance; this blending proportions can be designed depending of the target performances.

These tests have also shown the advantage of blending different types of sludge to produce the filter cake: for example, while biological sludge prevents high fluxes of filtration it helps to retain a high level of TSS; primary sludge provides filtrability properties to the cake layer while, when used alone, did not provide a high of TSS removal.

Without being bound by theory, digested sludge showed some sorption properties but when used alone had the tendency to clog the filter.

Therefore, depending on the performance target desired (sorption of soluble COD, removal of TSS, high filtration flux), the invention may set a proportion of different type of sludge to be used.

The various aspects of the present invention may each be combined with any of the other aspects. These and other aspects of the invention will be apparent from and elucidated with reference to the embodiments described hereinafter.

### BRIEF DESCRIPTION OF THE FIGURES

The present invention and in particular preferred embodiments thereof will now be disclosed in greater details with reference to the accompanying figures. The figures show ways of implementing the present invention and are not to be construed as being limiting to other possible embodiments falling within the scope of the attached claim set.
Figure 1 schematically illustrates a first embodiment of a wastewater treatment facility,
Figure 2 schematically illustrates a first embodiment of a wastewater treatment facility,
Figure 3, schematically illustrates a second embodiment of a wastewater treatment facility,
Figure 4, schematically illustrates a third embodiment of a wastewater treatment facility,
Figure 5, schematically illustrates a fourth embodiment of a wastewater treatment facility.

### DETAILED DESCRIPTION OF AN EMBODIMENT

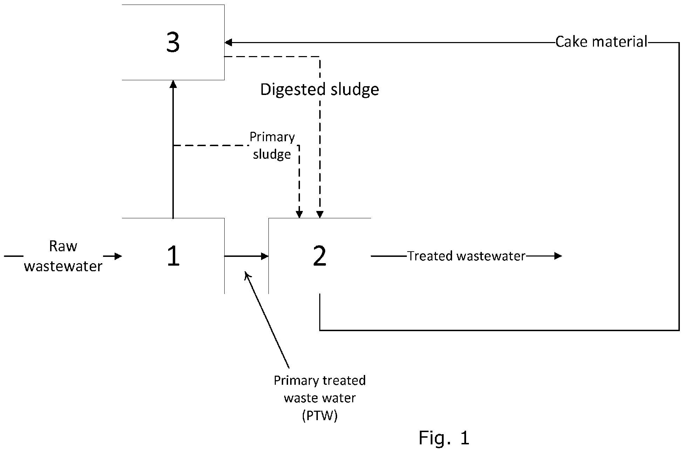

Reference is made to figures 1-5 showing different embodiments of a wastewater treatment facility in which a cake filtration is employed as a treatment step. While the figures herein are referred to as wastewater treatment facility, they are also referenced to illustrate the process aspect of the present invention. Please note that in the figures dotted lines illustrating flows are used for illustrating substances/flows used for providing the filtration cake.

Figure 1 shows a first embodiment of a wastewater treatment line (also referred to as a facility herein) where the raw wastewater is first treated in a primary step 1 (either for example a primary settler of a rotating belt filter, or a drum/disc filter with chemicals or not) and then fed to the cake filtration device 2. The cake filtration device 2 can receive sludge to form the filtration cake layer from different parts of the plant: primary sludge from the primary treatment step 1, and/or digested sludge from the anaerobic digester 3. The primary treatment step 1 produces primary sludge and primary treated water PTW, and the primary treated water is fed into and filtered by the cake filtration device 2. It is noted that by the primary treatment produces primary sludge and primary treated water, is preferably meant that the two fractions are made available, since the raw wastewater typically contains the primary sludge. The filtrate from the cake filtration device is considered to be treated wastewater.

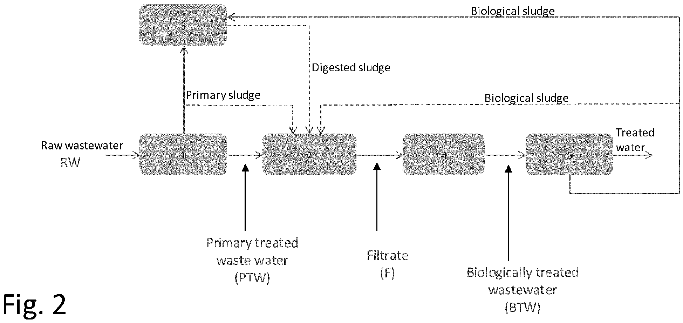

Figure 2 shows a second embodiment of a wastewater treatment line (also referred to as a facility herein) where the raw wastewater is first treated in a primary step 1 (either for example a primary settler of a rotating belt filter, or a drum/disc filter with chemicals or not) and then fed to the cake filtration device 2. The cake filtration device can receive sludge to form the filtration cake layer from different parts of the plant: primary sludge from the primary step, digested sludge from the anaerobic digester and/or biological sludge from the separation step following a biological reactor (or directly from the biological reactor).

The solids of the sludge used in the cake filtration device 2 (the material of the filtration cake) becomes loaded in COD and TSS as the primary wastewater (raw wastewater previously treated in the primary step) is filtered through the filtration cake; The cake material can then discharged (continuously or by batch) to the anaerobic digester in order to produce more biogas, a source of energy (see fig. 1 for this feed of the cake material to digester).

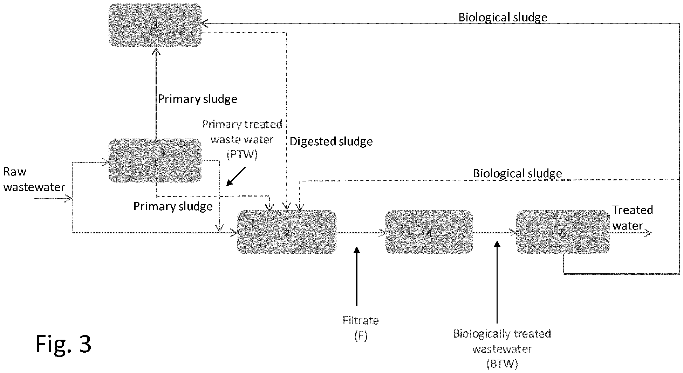

Figure 3 shows a third embodiment where only a part of the raw wastewater is diverted to the primary step 1 and the rest is fed to the cake filtration device 2. An objective could be to produce just enough primary sludge to feed the cake filtration device 2 (to form the filtration cake). The primary wastewater is fed also to the cake filtration device 2. As above, different types of sludge can be fed into the cake filtration device 2 to form the filtration cake layer.

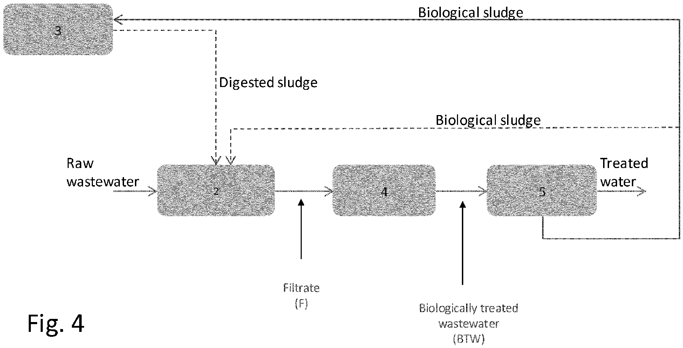

Figure 4 shows a fourth embodiment where no primary sludge is used to form the filtration cake layer; in this embodiment, the filtration cake layer is formed from digested sludge and biological sludge. The raw wastewater is fed directly to the cake filtration device 2 that uses sludge from the produced in the biological reactor 4 and/or sludge from the anaerobic digestion 3.

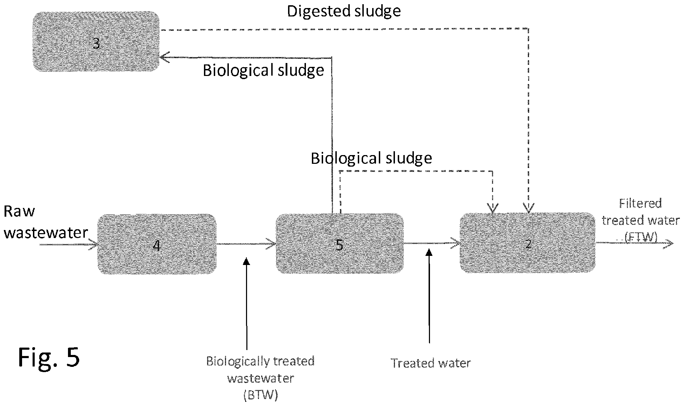

Figure 5 is another configuration where there is no primary treatment step but a biological reactor 4 first, for example a high load activated sludge. The biological sludge produced in the biological reactor 4 can be recovered in a separation step 5 (for example a clarifier) and can then be fed to the cake filtration device. Digested sludge can also be used to improve the absorption of soluble COD. The treated water is filtered through the filtration cake device 2, where the filtration cake is formed by solids in the biological sludge and digested sludge.

In such embodiments, the cake filtration step (filtration through the filtration cake) can improve the performance of the high load activated sludge that with at least a medium TSS and COD removal yield. The cake filtration can help this type of treatment meet some of the most stringent effluent requirements.

Since the cake filtration device, while using a blend of primary and digested sludge, can remove more than 50% of soluble COD, a downstream biological tank 4 used to finish the treatment/further treatment of the wastewater (the device 4 in figures 2, 3 and 4) may be made much smaller in size and can use a wider range of technologies, bringing new design possibilities to the wastewater treatment plant.

For example, in the case when using the cake filtration and most of the COD has been removed, then potentially only a second step for nitrogen treatment is required. Therefore, technologies like bio-filtration, moving bed bioreactors or partial nitritation plus de-ammonification can be used. These processes can be compact and can use less energy than conventional processes.

Overall, the use of the cake filtration technology can generate more biogas by adsorbing a high (maximum) amount of carbon on the sludge (which will be anaerobically digested), and also can permit the use of other technologies less energy intensive than conventional technology. This invention is therefore an important technological step towards the energy positive wastewater treatment plant.

On an overall level, the process for treatment of wastewater the process comprising the steps of
- providing primary sludge (PS) from a primary treatment of at least a fraction of said wastewater and/or biological sludge (BS) from a biological treatment of at least a fraction of the wastewater;
- providing digested sludge (DS) by digestion of primary sludge (PS) and/or biological sludge (BS);
- providing a filtration cake by deposition of solids on a fluid penetrable support surface, wherein said solids being comprised in the digested sludge (DS) and in at least one of primary sludge (PS) and/or in a biological sludge (BS);
- treating said wastewater, wherein treating said water comprises filtering wastewater through the filtration cake thereby providing a filtrate (F), the wastewater preferably being raw wastewater, screened wastewater, primary treated wastewater and/or a biologically treated wastewater.

With reference to fig. 1, the step of providing primary sludge (PS) can be performed by e.g. a settler or other device configured for allowing heavier substances to be removed from the raw wastewater to produce primary sludge. Please note that in the embodiment shown in fig. 1 no biological treatment is applied, but as will become apparent from the following disclosure, a biological treatment of at least a fraction of the wastewater can be used to produce biological sludge. The primary sludge and/or biological sludge is fed into a digester 3 in which the sludge is digested to produce digested sludge DS which is used in the formation of the filtration cake.

Providing of the filtration cake typically involves the process of feeding digested sludge DS and at least one of primary sludge PS and/or biological sludge BS towards a fluid penetrable support surface, having openings allowing fluid to pass through but arresting solids having a size above pre-selected size thereby providing a deposition of solids contained in the sludge(s). A continuation of this process will eventually result in a layer solids deposited on support surface, which layer is referred to herein as a filtration cake.

With reference to fig. 1, the primary treated wastewater resulting from the separation step 1 (e.g. settling) is fed through the filtration cake. As disclosed herein, the filtration can be seen a treatment. According the process as outlined inter alia in fig.1 comprises the step of treating the wastewater, such as biological treated wastewater, by filtering said wastewater through the filtration cake thereby producing a filtrate (F). As will become apparent below, the process may also comprise treating by filtering biologically treated wastewater through the filtration cake thereby producing a filtrate (F). In fig. 1, the filtrate is considered to be treated wastewater.

As also indicated in fig. 1, the process may further comprising removal of the filtration cake and digesting at least a fraction of the filtration cake material; this is illustrated by the connection between the filtration cake device 2 and the arrow to the digester 3 labelled "Cake material".

As illustrated inter alia in fig. 2-5, the treatment process may further comprise biologically 4 treating wastewater (such as raw wastewater - see fig. 5) or said filtrate F (see fig.s 2-4) to provide biologically treated wastewater (BTW).

As illustrated in fig.s 2-5 the process may when biological treatment 4 is applied also comprise a separation 5 in which the biologically treated wastewater BTW, resulting from the biological treatment, is separated into at least treated water TW and biological sludge BS. Such biological sludge may be digested to provide digested sludge DS and/or used non-digested in the formation of the filtration cake as illustrated in fig.s 2-5.

Reference is made to fig.s 1 and 2. In these embodiments, the process for treatment of wastewater comprises a primary treatment 1 raw wastewater by separating raw wastewater RW into at least primary sludge PS and primary treated wastewater PWT. The separation is performed in a manner resulting in the solid content is higher in the primary sludge PS than in the primary treated wastewater. At least a fraction - typically all - of the thereby provided primary sludge digested to provide digested sludge DS.

Reference is made to fig.s 1-3. In these embodiments, at least a fraction of the primary sludge PS produced by the separation 1 is used in the formation of the filtration cake by deposition of solids contained in the primary sludge on said fluid penetrable support surface. Further, the treatment of wastewater comprises filtering the primary treated water through the filtration cake, where the primary treated wastewater PTW is produced by the separation 1 as a fraction containing a lower content of solids than the primary sludge PS.

As illustrated in fig. 3, a process for treatment of wastewater, may further comprise filtering raw wastewater RWW and primary treated wastewater PTW through the filtration cake. This is typically applied by blending raw wastewater and primary treated wastewater and filtering the blend through the filtration cake. It is noted that the blending may takes place prior to be subjected to the filtering but it may also be provided feeding the two wastewater streams towards the filtration cake one at a time.

As presented herein, some of the embodiments utilizes a primary treatment 1 (also referred to as a separation) in which wastewater such a raw wastewater is separated into primary treated wastewater PTW and primary sludge PS. This may be embodied by one or more of a clarifier, an enhanced clarifier, a rotating belt filtration, a hydro cyclone, a settler.

In the embodiment of fig. 4, the filtration by a filtration is provided upstream of a biological treatment and the raw wastewater is not subjected to a primary treatment as disclosed herein. In such embodiments, the process for treatment of wastewater typically comprises filtering the raw wastewater RRW through the filtration cake to produce a filtrate F thereof.

As illustrated in fig.s 2-4, a filtrate is produced by filtering raw wastewater and/or primary treated wastewater and such filtrate may contain biological material suitable for biological treatment. According, and as illustrated in fig.s 2-4, the produced filtrate F is biologically treated to produce biologically treated wastewater BTW.

The embodiment shown in fig. 5 has the filtration by a filtration cake located downstream of the biological treatment; in the specific embodiment of fig. 5, a separation 5 is fluidic interposed between the downstream filtration cake and the upstream biological treatment. The separation 5 produces a fraction of biological sludge BS and treated water where the solid content is higher in the biological sludge than in the treated water. As illustrated, in fig. 5, the process for treatment of wastewater comprising filtering the treated water TW through the filtration cake (produced by the separation 5) to produce filtered treated water FTW as a filtrate F.

A process for treatment of wastewater according to present invention may also comprising a screening (not illustrated) of raw wastewater to remove solids above a certain size, such as removing solids have a size larger than 1mm, such as larger than 3mm, preferably larger than 6mm, such as larger than 10mm, preferably larger than 15mm, such as larger than 20mm, from the raw wastewater. The screening is fluidic arranged upstream of said filtering through the filtration cake and the output from the screening is still considered to be raw wastewater since it is generally designed to remove larger solids, which e.g. could have a destruction effect of the downstream treatment.

A biologically treatment 4 as referenced herein may preferably be performed by using a membrane bioreactor (MBR).

The herein referenced fluid penetrable support surface may preferably be provided by an element comprising through going openings of a size being selected so as to arrest solids having a size above a certain size, preferably above 25 micron, such as above 15 micron, such as above 10 micron, preferably above 5 micron.

The above disclosure of preferred embodiments with reference to the accompanying figures has focussed on a process for treatment of wastewater, the following disclosure of preferred embodiments focus on various embodiments of a treatment facility embodying the various preferred embodiments of the process.

As illustrated in fig.s 1-5, a wastewater treatment plant comprising a digester 3. Such a digester is configured to provide an anaerobic digestion of biological material and is fluidic connected to means for providing primary sludge and/or means for providing biological sludge. The digester 3 is configured for digesting the primary sludge and/or biological sludge to provide digested sludge DS.

The means for providing primary sludge may be a primary treatment system 1, in which a mechanical and/or chemical extraction of sludge from raw wastewater is carried out to produce primary sludge. The means for providing primary sludge may comprise a clarifier, enhanced clarifier, rotating belt filter, a settler, a primary settler of a rotating belt filter, or a drum/disc filter, with chemicals or not or the like

The *means for providing biological sludge* is preferably used to reference a biological treatment device 4, such as a biological reactor in which wastewater or a fraction thereof is treated biologically. Such means for providing biological sludge may be selected from Membrane Bioreactors, Continuous Stirred Tank Bioreactors, Bubble Column Bioreactors, Airlift Bioreactors, Fluidized Bed Bioreactors, Packed Bed Bioreactors, Photo-Bioreactors. A separation 5 may be applied to the biologically treated wastewater to separate water therefrom to provide biological sludge.

A wastewater treatment plant also has a cake filtration device 2 comprising a fluid penetrable support surface configured for supporting a filtration cake. The support surface is typically as disclosed herein an element comprising through going openings allow fluid to pass through arresting solids having a size above a certain predefined size. The cake filtration device 2 selectively fluidic connected, e.g. via a piping, to the digester 3 to receive digested sludge DS and to the means for providing at least one of primary sludge PS and/or means for biological sludge BS, where the biological sludge is provided by a biological treatment of wastewater. By selectively is preferably meant that the connection can be established/shut-off by demand typically by including shut-off valves in piping providing the connections.

This receive of the digester sludge, primary sludge and/or biological sludge is for providing a deposition of solid matter contained in the digested sludge DS and in at least one of the primary sludge and/or biological sludge on the support surface for forming the filtration cake thereon. This deposition is provided by the fluid penetrable surface allows fluid (liquid) of the sludge to pass through e.g. the through going openings while arresting solid contained in sludge on the surface of the support surface. This will provide a filtration cake eventually ready for being used for filtration.

The cake filtration device 2 is further selectively connected to means for providing wastewater, such as raw and/or screened wastewater, primary treated wastewater and/or biological treated wastewater to filter the wastewater through the filtration cake to produce a filtrate F. The means for providing a wastewater may be a distribution network for wastewater, a tank receiving and storing wastewater from a production facility, from a road tank, or a sewerage (wastewater) network.

The cake filtration device may be embodied by connecting two cavities though the fluid penetrable support surface, so the that fluid used to provide the filtration cake or the fluid to be filtered is fed into one of the cavities and the fluid is forced towards the support surface so as to flow into the downstream cavity. It is furthermore noted that cake filtration device 2 may be used as a dead-end filtration device or as a through flow filtration device.

As illustrated in the figures, the embodiment of fig. 1 does not include a biological reactor 4; whereas a wastewater treatment facility as disclosed in fig. 2-5 comprises a biological reactor 4 for biological treatment of wastewater or said filtrate F to provide biologically treated wastewater (BTW). Such biological reactor may comprise a tank inside which the material to be biological treated is given a retention time and in some instances also provided with oxygen/air through an aeration.

A wastewater treatment facility may also comprise a separator 5 (see fig.s 2-5) fluidic connected e.g. by piping to the biological reactor 4 for receiving said biological treated wastewater BTW and separating it into at least treated water TW and biological sludge BS. Such a separator 5 may be a settler, clarifier or other suitable device configured for separating the biological treated wastewater into fractions where the fraction treated waste has a lower solid content that the biological sludge.

The digester 3 may be fluidic connected by use of e.g. piping to the separator 5 (when such a separator is applied - see fig.s 2-5) for receiving and digesting said biological sludge BS to provide digested sludge DS.

Reference is made to fig.s 1-3. In these embodiments the wastewater treatment facility also has a primary treatment system 1 having an inlet for receiving raw wastewater and configured for separating said raw wastewater into at least primary sludge PS and primary treated wastewater PTW, wherein the solid content is higher in the primary sludge (PS) than in the primary treated wastewater PTW. Such a primary treatment system 1 may be a settler, clarifier or other systems configured for providing primary sludge and primary treated wastewater. The primary treatment system 1 is fluidic connected, e.g. by piping, to the digester 3 to feed at least a fraction of primary sludge PS into the digester 3.

The cake filtration device 2 further is in the embodiments of fig.s 1-3 selectively fluidic connected to the primary treatment system (1) to receive primary sludge PS, to deposit solids contained in the received primary sludge PS on the fluid penetrable support surface. The filtration cake system 2 is typically fluidic connected e.g. by piping to the primary treatment system 1 for receiving and filtering primary treated wastewater PTW.

In the embodiment shown in fig. 3, the filtration cake system 2 is further fluidic connected e.g. by piping to receive means for providing raw wastewater RWW, preferably so as to filter e.g. a blend of raw wastewater RWW and primary treated wastewater PTW. Although the blending in fig. 3 is illustrated as being performed outside the filtration cake system 2, the invention is not limited to this since the above disclosed blending may be applied.

A primary treatment system 1 may comprise one or more of a clarifier, an enhanced clarifier, a rotating belt filtration, a hydro cyclone, a settler.

As illustrated in fig. 4, a wastewater treatment facility may be configured so that the cake filtration device 2 is fluidic connected to means for providing raw wastewater RRW to produce a filtrate thereof F. Thus, in such embodiments, a primary treatment system 1 may be left out. In such embodiments, which also comprise a biological reactor 4, such biological reactor 4 is arranged to be in fluidic connection with the cake filtration device 2 to receive a filtrate F provided by the cake filtration device 2. As illustrated, the filtrate may be provided by filtering raw wastewater through the cake filtration device 2.

Reference is made to fig. 5. In this embodiment of a wastewater treatment facility the cake filtration device 2 is fluidic connected to the separator 5 to receive and filter said treated water TW to produce filtered treated water FTW as a filtrate.

A wastewater treatment facility according to the present invention may further comprising a screening system (not illustrated) for removing solids above a certain size from the raw wastewater, such as removing solids have a size larger than 1mm, such as larger than 3mm, preferably larger than 6mm, such as larger than 10mm, preferably larger than 15mm, such as larger than 20mm. Such a screening system is arranged so as to be fluidic connected upstream of cake filtration device 2.

The biological reactor 4 used in the embodiments shown in fig.s 2-5 may be a membrane bioreactor MBR.

The fluid penetrable support surface used in the embodiments shown in fig.s. 1-5 may be an element comprising through going openings of a size being selected so as to arrest solids having a size above a certain size, preferably above 25 micron, such as above 15 micron, such as above 10 micron, preferably above 5 micron.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference symbols used:

- 1: Primary treatment system (clarifier, enhanced clarifier, rotating belt filtration)
- 2: Cake filtration system
- 3: Anaerobic sludge digestion
- 4: Biological reactor (high load activated sludge for example)
- 5: Separation step (such as a liquid/sludge separation)

## Claims

1. A process for treatment of wastewater the process comprising the steps of
- providing primary sludge (PS) from a primary treatment of at least a fraction of said wastewater and/or biological sludge (BS) from a biological treatment of at least a fraction of the wastewater;
- providing digested sludge (DS) by digestion of primary sludge (PS) and/or biological sludge (BS);
- providing a filtration cake by deposition of solids on a fluid penetrable support surface, wherein said solids being comprised in the digested sludge (DS) and in at least one of primary sludge (PS) and/or in a biological sludge (BS);
- treating said wastewater, wherein treating said water comprises filtering wastewater through the filtration cake thereby providing a filtrate (F), the wastewater preferably being raw wastewater, screened wastewater, primary treated wastewater and/or a biologically treated wastewater.

2. A process for treatment of wastewater according to claim 1, further comprising biologically (4) treating wastewater or said filtrate (F) to provide biologically treated wastewater (BTW).

3. A process for treatment of wastewater according to claim 2, further comprising separating (5) the biologically treated wastewater (BTW) into at least treated water (TW) and biological sludge (BS).

4. A process for treatment of wastewater according to claim 3, further comprising digesting said biological sludge (BS) to provide digested sludge (DS).

5. A process for treatment of wastewater according to any of the preceding claims, further comprising
- primary treating (1) raw wastewater by separating raw wastewater (RW) into at least primary sludge (PS) and primary treated wastewater (PWT), wherein the solid content is higher in the primary sludge (PS) than in the primary treated wastewater,
and wherein at least a fraction said primary sludge being digested to provide digested sludge (DS).

6. A process for treatment of wastewater according to claim 5, further comprising a deposition of solids contained in the primary sludge on said fluid penetrable support surface to provide the filtration cake.

7. A process for treatment of wastewater according to any one of claims 5 or 6, further comprising filtering said primary treated wastewater (PTW) through the filtration cake.

8. A process for treatment of wastewater according to claim 1, comprising filtering raw wastewater (RRW) through the filtration cake to produce a filtrate (F) thereof.

9. A process for treatment of wastewater according to any one of claims 3 to 8, comprising filtering said treated water (TW) through the filtration cake, to produce filtered treated water (FTW) as a filtrate (F).

10. A wastewater treatment facility comprising
- a digester (3) fluidic connected to means for providing primary sludge and/or means for providing biological sludge; said digester (3) being configured for digesting said primary sludge and/or biological sludge to provide digested sludge (DS);
- a cake filtration device (2) comprising a fluid penetrable support surface configured for supporting a filtration cake, said cake filtration device(2) being selectively fluidic connected
- to the digester (3) to receive digested sludge (DS);
- to said means for providing at least one of primary sludge and/or biological sludge;
- to means for providing wastewater, such as raw wastewater, screened wastewater, primary treated wastewater and/or biological treated wastewater to filter said wastewater through the filtration cake to produce a filtrate (F).

11. A wastewater treatment facility according to claim 10, further comprising a biological reactor (4) for biological treatment of wastewater or said filtrate (F) to provide biologically treated wastewater (BTW).

12. A wastewater treatment facility according to any one of claims 10 or 11, further comprising
- a primary treatment system (1) having an inlet for receiving raw wastewater and configured for separating said raw wastewater into at least primary sludge (PS) and primary treated wastewater (PTW), wherein the solid content is higher in the primary sludge (PS) than in the primary treated wastewater (PTW),
wherein said primary treatment system (1) is fluidic connected to said digester (3) to feed at least a fraction of said primary sludge (PS) into the digester (3).

13. A wastewater treatment facility according to claim 12, wherein the cake filtration device (2) is further selectively fluidic connected to said primary treatment system to receive primary sludge (PS), to deposit solids contained in the received primary sludge (PS) on said fluid penetrable support surface.

14. A wastewater treatment facility according to claim 10, wherein the cake filtration device (2) is fluidic connected to means for providing raw wastewater (RRW) to produce a filtrate thereof (F).

15. A wastewater treatment facility according to claim 14, wherein the cake filtration device(2) is fluidic connected to the separator (5) to receive and filter said treated water (TW) to produce filtered treated water (FTW) as a filtrate.
